# EUROPÄISCHE PATENTSCHRIFT

(11) **EP 3 466 663 B1**
(45) Veröffentlichungstag und Bekanntmachung des Hinweises auf die Patenterteilung: **01.03.2023**
(21) Anmeldenummer: 18190625.6
(22) Anmeldetag: 24.08.2018
(51) Int. Cl.: B30B 9/30, B30B 15/00, A01F 15/04, A01F 15/08

(54) **LANDWIRTSCHAFTLICHE BALLENPRESSE SOWIE VERFAHREN ZU DEREN BETRIEB**
AGRICULTURAL BALING PRESS AND METHOD FOR OPERATING SAME
PRESSE À BALLES AGRICOLE AINSI QUE SON PROCÉDÉ DE FONCTIONNEMENT

(30) Priorität: 26.09.2017 DE 10201712211.
(43) Veröffentlichungstag der Anmeldung: 10.04.2019
(73) Patentinhaber: Usines CLAAS France S.A.S, 57140 St. Rémy / Woippy (FR)
(72) Erfinder: Arnould, Cyrille, 57645 Montoy-Flanville (FR)
(74) Vertreter: CLAAS Gruppe

(56) Entgegenhaltungen:
- DD-A1- 263 912
- DE-A1- 19 644 574
- DE-A1- 19 913 030
- GB-A- 1 107 414

## Beschreibung

Die vorliegende Anmeldung betrifft eine Ballenpresse gemäß dem Oberbegriff von Anspruch 1. Diese umfasst einen Vorverdichter und einen Hauptverdichter, wobei der Vorverdichter dazu geeignet ist, zu pressendes Material innerhalb eines Vorkanals vorzuverdichten und der Hauptverdichter innerhalb eines Hauptkanals oszillierend hin und her bewegbar ist, sodass er dazu geeignet ist, das mittels des Vorverdichters vorverdichtete Material weiter zu verdichten und schließlich einen quaderförmigen Ballen zu pressen. Weiterhin betrifft die vorliegende Anmeldung ein Verfahren zum Betrieb einer solchen Ballenpresse gemäß dem Oberbegriff von Anspruch 9.

Ballenpressen sowie Verfahren zu deren Betrieb der vorstehend genannten Art sind im Stand der Technik bereits bekannt. Hierzu wird exemplarisch auf die Europäische Patentschrift EP 0 951 988 B1 hingewiesen. Diese beschreibt eine gattungsgemäße Ballenpresse, wobei insbesondere Belastungsspitzen des Hauptverdichters während eines Pressvorgangs ohne Unterbrechung des Kraftflusses abgebaut werden sollen. Eine weitere Ballenpresse gemäss dem Oberbegriff des Anspruchs 1 ist der DE 196 44 574 A1 entnehmbar.

Bekannte Ballenpressen haben das Problem, dass sie eine vergleichsweise große Leistungsaufnahme aufweisen. Dies gilt insbesondere für großformatige Ballenpressen, mittels derer Ballen mit einem Volumen von über 1 m³ pressbar sind. Die erforderliche Leistung muss während des Betriebs von einer landwirtschaftlichen Arbeitsmaschine, z.B. einem Traktor, bzw. zumindest mittelbar mittels Verbrennungskraftmaschine einer solchen Arbeitsmaschine bereitgestellt werden, wodurch die Betriebskosten der bekannten Ballenpresse insgesamt vergleichsweise hoch sind.

Der vorliegenden Anmeldung liegt daher die Aufgabe zugrunde, eine Ballenpresse sowie ein Verfahren zu deren Betrieb bereitzustellen, die einen gegenüber Ballenpressen gemäß dem Stand der Technik reduzierten Energiebedarf aufweist.

Die zugrunde liegende Aufgabe wird erfindungsgemäß mittels einer Ballenpresse gemäß Anspruch 1 gelöst. Vorteilhafte Ausgestaltungen sind in den Unteransprüchen 2 bis 7 beschrieben.

Bei dem "Vorkanal" und dem "Hauptkanal" kann es sich im Sinne der vorliegenden Anmeldung insbesondere um Kanäle mit rechteckförmigem Querschnitt handeln. Der Vorkanal kann insbesondere eine geschwungene Form aufweisen, die es einem Vorverdichter vereinfacht, mittels einer umlaufenden Bewegung eine Vorverdichtung von in dem Vorkanal befindlichen Material vorzunehmen, wobei sich beispielsweise ein Rechen des Vorverdichters auf einer ellipsenförmigen Bahnkurve bewegen kann. Der Hauptkanal ist demgegenüber typischerweise in sich gerade ausgeführt, sodass der Hauptverdichter die oszillierende Hin-und-her-Bewegung entlang einer Kanalachse des Hauptkanals ausführen kann.

Der Vorverdichter wird typischerweise auch als "Raffer" bezeichnet. Er muss nicht unbedingt eine erhebliche Verdichtungsleistung erbringen. Seine Funktion kann sich stattdessen grundsätzlich auch fast ausschließlich in einer Förderleistung erschöpfen, mittels derer das zu verdichtende Material in den Hauptkanal überführt wird.

Bei der "Antriebseinrichtung" kann es sich im Sinne der vorliegenden Anmeldung um jede Art von Einrichtung handeln, die dazu geeignet ist, den Hauptverdichter in Bewegung zu versetzen. Hierbei ist es insbesondere denkbar, dass die Antriebseinrichtung lediglich eine mittelbare Wirkung entfaltet und nicht als solche geeignet ist, eine erforderliche Antriebsleistung zu erzeugen. Stattdessen kann es sich bei der Antriebseinrichtung vor allem um eine Getriebeeinrichtung handeln, die beispielsweise an eine Nebenabtriebswelle einer landwirtschaftlichen Arbeitsmaschine angeschlossen werden kann. Dies ist insbesondere bei fahrbaren Ballenpressen der Fall, die hier mit umfasst sein sollen. Die "Antriebseinrichtung" ist dann lediglich dafür zuständig, ein von der Nebenabtriebswelle abgenommenes Drehmoment derart umzusetzen, dass sich die oszillierende Bewegung des Hauptverdichters ergibt. Letzterer ist dabei typischerweise unmittelbar an die Antriebseinrichtung angeschlossen.

Die erfindungsgemäße Ballenpresse ist dadurch gekennzeichnet, dass ihr Hauptverdichter von der Antriebseinrichtung abkoppelbar ist. Mit anderen Worten ist der Hauptverdichter der Ballenpresse ausgehend von einem Ankoppelzustand, in dem er mittels der Antriebseinrichtung antreibbar ist, in einen Abkoppelzustand überführbar, in dem der Hauptverdichter von der Antriebseinrichtung abgekoppelt ist. Dieses "Abkoppeln" hat mithin zur Folge, dass keine Kraftübertragung zwischen der Antriebseinrichtung und dem Hauptverdichter mehr stattfindet, woraufhin der Hauptverdichter innerhalb des Hauptkanals still steht. Es versteht sich, dass der Hauptverdichter nach dem Abkoppeln ohne Weiteres wieder an die Antriebseinrichtung angekoppelt werden kann, das heißt wieder in seinen Ankoppelzustand überführbar ist.

Die erfindungsgemäße Ballenpresse hat viele Vorteile. Insbesondere ist es möglich, den Hauptverdichter während eines Betriebs der Ballenpresse lediglich zeitweise zu betrieben. Dem liegt die Überlegung zugrunde, dass der Hauptverdichter einen übergroßen Anteil seiner Verdichtungsleistung lediglich während eines relativ kurzen, wiederkehrenden Zeitfensters im Betrieb der Ballenpresse erbringt. Dies ist immer dann der Fall, wenn vorverdichtetes Material ausgehend von dem Vorkanal in den Hauptkanal überführt wird. Dieses Material wird zunächst in dem Vorkanal mittels des Vorverdichters vorverdichtet und dann gewissermaßen in Form eines vorverdichteten Pakets durch den Übertrittsquerschnitt in den Hauptkanal bewegt. Dort angekommen wird das vorverdichtete Material von dem Hauptverdichter erfasst und gegen ein bereits zuvor gebildetes Ende eines im Entstehen begriffenen Ballens gepresst, wobei das Material sehr stark weiter verdichtet wird.

Der Übertritt des vorverdichteten Materials in den Hauptkanal findet jedoch lediglich periodisch statt, nicht ununterbrochen. Dies hat zur Folge, dass der Hauptverdichter einen wesentlichen Anteil seiner Betriebszeit lediglich mit geringer Effizienz genutzt wird, indem er das bereits innerhalb des Hauptkanals befindliche Material bzw. den im Entstehen begriffenen Ballen weiter verdichtet. Dabei versteht es sich, dass die zunehmende Dichte des Materials mit einer immer schwächeren Wirkung des Hauptverdichters im Hinblick auf die weitere Verdichtung des Materials einhergeht. Daher liegt der vorliegenden Erfindung die Idee zugrunde, den Hauptverdichter in dem beschriebenen ineffizienten Zeitfenster schlechterdings "abzuschalten", was mittels der erfindungsgemäßen Abkoppelung des Hauptverdichters von der Antriebseinrichtung erreicht wird. Der zeitweise stillstehende Hauptverdichter muss dann nicht fortwährend mittels der Antriebseinrichtung beschleunigt werden, wodurch die Leistungsaufnahme der Ballenpresse stark sinkt und mit ihr die Betriebskosten.

Als weiterer Vorteil hat sich unter anderem ergeben, dass ein Verschleiß des Hauptverdichters minimiert wird, da die lediglich wenig effektiven "Leerläufe" des Hauptverdichters vermieden werden. Weiterhin werden die typischerweise mit dem Betrieb des Hauptverdichters einhergehenden Vibrationen stark reduziert, was sowohl für die Ballenpresse selbst als auch für eine etwaige angeschlossene landwirtschaftliche Arbeitsmaschine vorteilhaft ist.

Gemäss der erfindungsgemäßen Ballenpresse umfasst der Hauptverdichter mindestens eine Übertragungseinrichtung, die mindestens eine Kolben-Zylinder-Einheit aufweist. Diese Kolben-Zylinder-Einheit umfasst zwei Arbeitsräume, nämlich einen Kolbenraum sowie einen Ringraum. Unter dem "Kolbenraum" wird im Sinne der vorliegenden Anmeldung ein an einem distalen Kolbenende angeordneter Arbeitsraum verstanden, der proportional zu einer Kolbenbewegung innerhalb des Zylinders größer oder kleiner wird, wobei der Kolbenraum bei Vorliegen des Kolbens in einer maximal in den Zylinder eingeschobenen Position ein minimales Volumen und bei Vorliegen des Kolbens in einer maximal aus dem Zylinder ausgezogenen Position ein maximales Volumen aufweist. Der "Ringraum" bezeichnet demgegenüber einen koaxial zum Kolben sowie entlang des Kolbens angeordneten Raum, der sich zwischen einer äußeren Mantelfläche des Kolbens und einer inneren Mantelfläche des Zylinders erstreckt. Der Kolbenraum ergibt sich dadurch, dass die Kolbenstange gegenüber dem Zylinder einen reduzierten Durchmesser aufweist, sodass zwischen dem Kolben und der inneren Mantelfläche des Zylinders ein Freiraum verbleibt, der den Ringraum bildet.

Die beiden Arbeitsräume der Übertragungseinrichtung sind mittels einer Fluidleitung strömungstechnisch miteinander verbunden, sodass ein Arbeitsfluid, insbesondere ein Hydrauliköl, ausgehend von dem Kolbenraum in den Ringraum sowie umgekehrt strömen kann. Diese Fluidleitung wirkt mit mindestens einer Ventileinrichtung zusammen, die in mindestens zwei Stellungen, nämlich einer Offenstellung sowie einer Schließstellung, betreibbar ist. Bei Vorliegen in ihrer Offenstellung gibt die Ventileinrichtung einen Fluidfluss zwischen den Arbeitsräumen frei, sodass der Kolben der Kolben-Zylinder-Einheit relativ zu dem zugehörigen Zylinder bewegbar ist. Mit anderen Worten ist es bei Vorliegen der Ventileinrichtung in ihrer Offenstellung möglich, dass der Kolben im Zuge seiner Bewegung innerhalb des Zylinders das jeweilige Arbeitsfluid auf den einen der beiden Arbeitsräume verdrängt, wodurch das Arbeitsfluid durch die Fluidleitung in den jeweils anderen Arbeitsraum ausweichen kann. Dieser Fluidfluss ist bei Vorliegen der Ventileinrichtung in ihrer Offenstellung in beide Richtungen möglich, sodass sich der Kolben "frei", das heißt lediglich unter Gegenwirkung von geringen, durch die Strömung des Arbeitsfluids bedingten Reibungswiderständen, innerhalb des Zylinders bewegen kann. Demgegenüber ist der Fluidfluss zwischen den Arbeitsräumen bei Vorliegen der Ventileinrichtung in ihrer Schließstellung versperrt. Dies hat zur Folge, dass das Arbeitsfluid nicht zwischen den Arbeitsräumen strömen kann und somit die Arbeitsräume nicht verlassen kann. Mithin ist es dem Kolben bei Vorliegen der Ventileinrichtung in ihrer Schließstellung nicht möglich, sich relativ zu dem Zylinder zu bewegen. Die Übertragungseinrichtung ist grundsätzlich somit auf ihre im Moment der Schließung der Ventileinrichtung eingestellte Konfiguration festgelegt.

Die auf die erfindungsgemässe Ballenpresse hat den besonderen Vorteil, dass der Hauptverdichter vergleichsweise einfach von der Antriebseinrichtung abgekoppelt werden kann. Somit ist es lediglich erforderlich, die Ventileinrichtung ausgehend von ihrer Schließstellung in ihrer Offenstellung zu überführen, sodass sich der Kolben der als Kolben-Zylinder-Einheit ausgebildeten Übertragungseinrichtung frei innerhalb des Zylinders bewegen kann. Hierdurch ist eine an einem proximalen Ende der Übertragungseinrichtung ausgeübte Antriebskraft nicht länger auf das distale Ende der Übertragungseinrichtung übertragbar, sondern schlägt sich lediglich in "freien" Bewegungen des Kolbens innerhalb des Zylinders nieder. Der an dem distalen Ende der Übertragungseinrichtung angeschlossene Hauptverdichter ist sodann funktionslos gestellt bzw. abgekoppelt. Ebenso leicht kann der Hauptverdichter wieder an die Antriebseinrichtung angekoppelt werden, indem die Ventileinrichtung wieder in ihre Schließstellung überführt wird. Hierdurch wird die Übertragungseinrichtung wieder dazu befähigt, axiale Kräfte zu übertragen.

Die bevorzugte Ausführungsform weiter ausgestaltend es von Vorteil, wenn die Fluidleitung über ein Rückschlagventil verfügt, das parallel zu der Ventileinrichtung geschaltet ist. Das Rückschlagventil ist dabei derart ausgerichtet, dass es einen Fluidfluss von dem Kolbenraum in Richtung des Ringraums freigibt und umgekehrt einen solchen von dem Ringraum in Richtung des Kolbenraums sperrt. Diese Ausgestaltung hat den besonderen Vorteil, dass der Zeitpunkt der Überführung der Ventileinrichtung von der Offenstellung in die Schließstellung zumindest insoweit beliebig gewählt werden kann, als der bzw. die Kolben unabhängig von ihrer Stellung innerhalb des jeweils zugehörigen Zylinders vollständig in selbige einfahren können. Dies liegt darin begründet, dass das Arbeitsfluid trotz geschlossener Ventileinrichtung über das Rückschlagventil ausgehend von dem Arbeitsraum in den Ringraum überströmen kann. Auf diese Weise wird die Übertragungseinrichtung in jedem Falle zunächst "zusammengefahren", bevor sie wieder Kräfte überträgt.

Umgekehrt analog hierzu versteht es sich, dass die Ausführung der Übertragungseinrichtung als Kolben-Zylinder-Einheit automatisch im Zuge der Abkoppelung des Hauptverdichters selbigen in eine von der Antriebseinrichtung abgewandte Verdichtungsstellung schiebt. In dieser "Verdichtungsstellung" befindet sich der Hauptverdichter in einer maximal von der Antriebseinrichtung abgewandten Position, mithin gewissermaßen an einem hinteren Totpunkt innerhalb des Hauptkanals. Die beschriebene Funktionalität liegt darin begründet, dass eine Kraftübertragung mittels der Übertragungseinrichtung selbst bei in ihrer Offenstellung vorliegender Ventileinrichtung zumindest noch insoweit möglich ist, als der Kolben unmittelbar stirnseitig mit dem zugehörigen Zylinder der Kolben-Zylinder-Einheit eingreift. Hierdurch ist die Übertragungseinrichtung dazu geeignet, zumindest noch Druckkräfte zu übertragen, bis sich der Hauptverdichter schließlich in seiner Verdichtungsstellung befindet. Ein "Zurückziehen" des Hauptverdichters ist hingegen aus den vorstehend beschriebenen Gründen sodann nicht mehr möglich, sodass der Hauptverdichter nach Erreichen seiner Verdichtungsstellung schließlich stillsteht.

Weiterhin ist eine solche Ausgestaltung der erfindungsgemäßen Ballenpresse vorteilhaft, bei der der Hauptverdichter ein Presselement umfasst, mittels dessen das Material innerhalb des Hauptkanals verdichtbar ist. Ein solches Presselement kann insbesondere von einer zumindest im Wesentlichen planen Platte gebildet sein. Die Übertragungseinrichtung ist vorzugsweise an einem der Antriebseinrichtung abgewandten Ende drehgelenkig mit dem Presselement sowie an einem der Antriebseinrichtung zugewandten Ende drehgelenkig mit einem Kurbelarm verbunden. Der Kurbelarm ist mittels der Antriebseinrichtung drehantreibbar gelagert, sodass er um eine zu einer Kanalachse des Hauptkanals senkrechte Antriebsachse rotieren kann. Mithin bewegt sich der Kurbelarm innerhalb einer Bewegungsebene, die parallel zu der Kanalachse orientiert ist. Es versteht sich, dass der mittels der Übertragungseinrichtung an diesem Kurbelarm gelagerte Hauptverdichter in axiale Richtung des Hauptkanals betrachtet mittels Rotation des Kurbelarms um seine Antriebsachse oszillierend hin und her bewegbar ist. Die doppeltgelenkige Anbindung des Hauptverdichters an den Kurbelarm mittels der Übertragungseinrichtung führt in Kombination mit dem Einschluss des Hauptverdichters innerhalb des Hauptkanals dazu, dass von dem Kurbelarm ausgeführte Auf- und AbwärtsBewegungen, die er gezwungenermaßen im Zuge seiner Kreisbahnbewegung ausführt, nicht auf den Hauptverdichter übertragen werden. Die Übertragungseinrichtung wirkt insoweit als Pendelstab, der lediglich zu Übertragung von Normalkräften geeignet ist.

Die erfindungsgemäße Ballenpresse weiter ausgestaltend weist diese mindestens eine Halteeinrichtung auf, mittels derer der Hauptverdichter bei Vorliegen in seiner Verdichtungsstellung festhaltbar ist. Dieses Festhalten des Hauptverdichters erfolgt im Zuge seiner Abkoppelung von der Antriebseinrichtung, wobei sichergestellt wird, dass der Hauptverdichter in seiner Verdichtungsstellung verbleibt, sobald er diese erstmalig nach dem Abkoppeln erreicht hat. Insbesondere ist es von Vorteil, wenn ein Presselement des Hauptverdichters an seinem der Antriebseinrichtung abgewandten Totpunkt haltbar ist.

Diese Ausgestaltung hat den Vorteil, dass der Hauptverdichter zusätzlich zu seiner eigentlichen Verdichtungsfunktion eine ergänzende Sperrfunktion ausüben kann. Hierbei ist zu erwähnen, dass der Vorkanal typischerweise in einem von der Antriebseinrichtung abgewandten Endabschnitt des Hauptkanals an letzteren angeschlossen ist. Mit anderen Worten befindet sich der Übertrittsquerschnitt in aller Regel in unmittelbarer Umgebung des jeweils im Entstehen begriffenen Ballens. Dies hat den Vorteil, dass etwaiges vorverdichtetes Material, das ausgehend von dem Vorkanal in den Hauptkanal überführt wird, sich bereits in unmittelbarer Nähe zu dem Ballen befindet, sodass das Material nach der Erfassung durch den Hauptverdichter lediglich über eine kurze Strecke innerhalb des Hauptkanals geführt werden muss. Sobald nun der Hauptverdichter nach seiner Abkoppelung von der Antriebseinrichtung in seiner Verdichtungsstellung zum Stehen kommt, blockiert er den Übertrittsquerschnitt und verhindert somit ein unbeabsichtigtes Übertreten von Material ausgehend von dem Vorkanal in den Hauptkanal. Stattdessen bildet der Hauptverdichter bzw. eine dem Vorkanal zugewandte Unterseite desselben gewissermaßen ein Widerlager, gegen das das vorzuverdichtende Material gedrückt werden kann. Hierdurch kann die Wirkung des Vorverdichters gegenüber einer solchen Ausführung, in der der Übertrittsquerschnitt frei ist, deutlich verbessert werden. Im Verhältnis zu solchen Ausgestaltungen, bei denen der Übertrittsquerschnitt mittels einer gesonderten Sperrklappe versperrt wird, erspart die beschriebene Ausführungsform eine ebensolche Sperrklappe.

In einer weiterhin vorteilhaften Ausgestaltung der erfindungsgemäßen Ballenpresse umfasst diese eine Steuerungseinrichtung, die dazu geeignet ist, die Abkopplung sowie die Ankoppelung des Hauptverdichters von bzw. an die Antriebseinrichtung zu steuern. Diese Steuerung kann insbesondere in Abhängigkeit eines Betriebszustands des Vorverdichters erfolgen. Auf diese Weise ist es möglich, den Hauptverdichter ausschließlich dann einzusetzen, wenn sein Betrieb die maximale Wirkung entfalten kann. Dies ist insbesondere dann der Fall, wenn mittels des Vorverdichters vorverdichtetes Material in den Hauptkanal überführt wird. Somit ist es beispielsweise denkbar, dass in einer Ausführungsform, bei der der Hauptverdichter dazu verwendet wird, den Übertrittsquerschnitt des Vorkanals zu versperren, die Steuerungseinrichtung unmittelbar vor einem Überführen von vorverdichtetem Material von dem Vorkanal in den Hauptkanal die Ventileinrichtung der Übertragungseinrichtung ansteuert und auf diese Weise in ihre Schließstellung überführt, sodass der Hauptverdichter an die Antriebseinrichtung angekoppelt wird. Daraufhin wird der Hauptverdichter fortan mittels der Antriebseinrichtung betrieben und innerhalb des Hauptkanals zunächst ausgehend von seiner Verdichtungsstellung in Richtung der Antriebseinrichtung zurückgezogen, sodass wobei eine Ausholstellung einnimmt. Hierdurch wird der Übertrittsquerschnitt frei, sodass das vorverdichtete Material in den Hauptkanal überführt werden kann. Dort wird es fortan mittels des Hauptverdichters weiter verdichtet, bis ein gewünschter Verdichtungsgrad erreicht ist. Beispielsweise ist es denkbar, den Betrieb des Hauptverdichters für einen definierten Zeitraum vorzunehmen. Sobald der gewünschte Verdichtungsgrad oder ein sonstiges Abbruchkriterium erreicht ist, wird die Ventileinrichtung wieder in ihrer Offenstellung überführt, wodurch der Hauptverdichter von der Antriebseinrichtung abgekoppelt und in seine Verdichtungsstellung überführt wird. Dort verbleibt der und versperrt fortan wieder den Übertrittsquerschnitt.

Aus verfahrenstechnischer Sicht wird die zugrunde liegende Aufgabe mittels des Verfahrens gemäß Anspruch 8 gelöst. Vorteilhafte Ausgestaltungen des Verfahrens sind in den Unteransprüchen 9 bis 12 dargelegt.

Gemäß dem erfindungsgemäßen Verfahren wird der Hauptverdichter gemäss Anspruch 1 zumindest während der Vorverdichtung des Materials, die in dem Vorkanal stattfindet, zumindest zeitweise von der Antriebseinrichtung abgekoppelt, sodass eine Bewegung des Hauptverdichters innerhalb des Hauptkanals ausgesetzt ist. Dieses Verfahren ist mittels der erfindungsgemäßen Ballenpresse besonders einfach ausführbar. Die sich durch das Verfahren ergebenden Vorteile sind zu dem vorstehend bereits in Kombination mit der Vorrichtung erläutert worden. Insbesondere ermöglicht das Verfahren, die Effizienz des Hauptverdichters deutlich zu steigern, indem vergleichsweise wirkungsschwache Betriebszeiten des Hauptverdichters vermieden werden. Hierdurch werden insbesondere der Verschleiß und der Energiebedarf der mittels des erfindungsgemäßen Verfahrens betriebenen Ballenpresse drastisch reduziert.

In einer vorteilhaften Ausgestaltung des erfindungsgemäßen Verfahrens wird der Hauptverdichter derart von der Antriebseinrichtung abgekoppelt, dass er in seiner Verdichtungsstellung zum Stehen kommt. Dies kann insbesondere den Vorteil haben, dass der Hauptverdichter in seinem dann vorliegenden Abkoppelzustand den Übertrittsquerschnitt zwischen dem Vorkanal und den Hauptkanal blockiert. Die sich hieraus ergebenden Vorteile sind vorstehend bereits dargelegt worden.

Weiterhin ist ein solches Verfahren vorteilhaft, bei dem die Bewegungsabläufe des Vorverdichters und des Hauptverdichters koordiniert werden. Dem liegt die Überlegung zugrunde, dass die Wirkung des Hauptverdichters auf frisch in den Hauptkanal überführtes Material am größten ist. Entsprechend ist es von Vorteil, wenn der Hauptverdichter während eines Vorverdichtungszeitraums in seinem Abkoppelzustand gehalten wird, wobei innerhalb des Vorverdichtungszeitraums Material mittels des Vorverdichters in dem Vorkanal vorverdichtet wird. Hierzu führt der Vorverdichter typischerweise eine Vielzahl von Verdichtungsbewegungen aus, wobei das zunächst lose vorliegende Material mittels des Vorverdichters gegriffen und "zusammengeschoben" wird. Sobald der Vorkanal einen vorbestimmten Füllgrad erreicht, führt der Vorverdichter eine Übertrittsbewegung aus, mittels derer er das vorverdichtete Material durch den Übertrittsquerschnitt in den Hauptkanal schiebt. Bezogen auf den Hauptverdichter ist es erforderlich, dass dieser in diesem Moment den Übertrittsquerschnitt freigibt. Insbesondere sollte der Hauptverdichter unmittelbar vor der Ausführung der Übertrittsbewegung des Vorverdichters ausgehend von seinem Abkoppelzustand in seinen Ankoppelzustand überführt werden, in dem er wieder an die Antriebseinrichtung angekoppelt ist. Auf diese Weise wird das in den Hauptkanal überführte, vorverdichtete Material unmittelbar mittels des Hauptverdichters erfasst und weiter verdichtet, wobei der Hauptverdichter die wesentliche Verdichtungsleistung erbringt. Der Hauptverdichter kann sodann nach der Ausführung einer bestimmten Anzahl von Vor-und-Zurück-Zyklen, nach einer bestimmten Zeit oder nach Erreichen eines sonstigen Abbruchkritieriums wieder von der Antriebseinrichtung entkoppelt werden.

Wie vorstehend bereits angedeutet, ist besonders von Vorteil, wenn der Hauptverdichter vor der Ausführung der Übertrittsbewegung des Vorverdichters ausgehend von seiner Verdichtungsstellung in seine gegenüberliegende aus Aushohlstellung überführt wird, in der der Hauptverdichter sich in einer der Antriebseinrichtung zugewandten Position innerhalb des Hauptkanals befindet. Bei Vorliegen in dieser Ausholstellung gibt der Hauptverdichter den Übertrittsquerschnitt frei, sodass der Vorverdichter das vorverdichtete Material in den Hauptkanal überführen kann.

Vorteilhafterweise wird unmittelbar nach der Überführung von vorverdichtetem Material in den Hauptkanal der Vorverdichter wieder derart betrieben, dass weiteres Material innerhalb des Vorkanals vorverdichtet wird. Noch vor Erreichen eines Zustands, in dem weiteres vorverdichtetes Material in den Hauptkanal überführt wird bzw. der Vorverdichter seine Überführungsbewegung ausführt, wird dabei der Hauptverdichter von der Antriebseinrichtung zunächst abgekoppelt und sodann wieder angekoppelt.

### Ausführungsbeispiele

Die erfindungsgemäße Ballenpresse sowie das erfindungsgemäße Verfahren werden nachstehend anhand eines Ausführungsbeispiels, das in den Figuren dargestellt ist, näher erläutert. Es zeigt:
- Fig. 1:: Einen Querschnitt durch eine Ballenpresse gemäß dem Stand der Technik,
- Fig. 2:: Einen Querschnitt durch eine Übertragungseinrichtung einer erfindungsgemäßen Ballenpresse,
- Fig. 3:: Einen Querschnitt durch eine in einem ersten Zustand vorliegende erfindungsgemäße Ballenpresse,
- Fig. 4:: Einen Querschnitt durch die Ballenpresse gemäß Figur 3, die in einem zweiten Zustand vorliegt, und
- Fig. 5:: Einen Querschnitt durch die Ballenpresse gemäß Figur 3, die in einem dritten Zustand vorliegt.

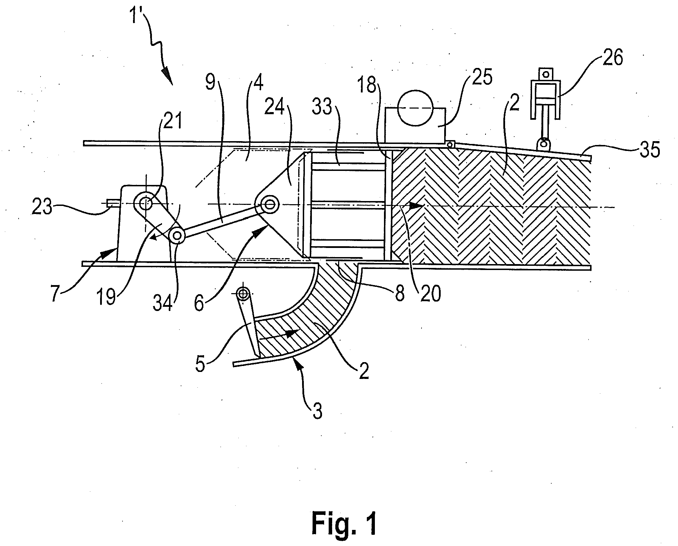

Zunächst wird bezüglich eines grundsätzlichen Aufbaus einer Ballenpresse auf eine Ballenpresse **1'** gemäß dem Stand der Technik verwiesen, die in **Figur 1** dargestellt ist. Diese umfasst einen Vorkanal **3** sowie einen Hauptkanal **4,** wobei innerhalb des Vorkanals **3** zu verdichtendes Material **2** mittels eines Vorverdichters **5** vorverdichtbar ist. Innerhalb des Hauptkanals **4** wird das zu verdichtende Material **2** mittels eines Hauptverdichters **6** verdichtet und schließlich zu einem Ballen gepresst. Der Vorkanal **3** und der Hauptkanal **4** sind mittels eines Übertrittsquerschnitts **8** miteinander verbunden, sodass vorverdichtetes Material **2** ausgehend von dem Vorkanal **3** in den Hauptkanal **4** überführt werden kann. Diese Überführung erfolgt typischerweise periodisch, wobei das Material **2** innerhalb des Vorkanals **3** zunächst auf ein gewisses Maß vorverdichtet wird, bevor es schließlich in den Hauptkanal **4** überführt wird.

Innerhalb des Hauptkanals **4** ist der Hauptverdichter **6** oszillierend hin und her bewegbar, wobei er sich fortwährend parallel zu einer Kanalachse **20** bewegt. Hierzu wirkt der Hauptverdichter **6** mit einer Antriebseinrichtung **7** zusammen, die mittels einer Welle **23** an einen Nebenatrieb einer landwirtschaftlichen Arbeitsmaschine angeschlossen werden kann. Die Antriebseinrichtung 7, die hier von einer Getriebeeinrichtung gebildet ist, wirkt mit einem Kurbelarm **19** zusammen, der um eine Antriebsachse **21** drehantreibbar gelagert ist. Diese Antriebsachse **21** erstreckt sich senkrecht zu der Kanalachse **20.** An dem Kurbelarm **19** ist unter Ausbildung eines Drehgelenks **34** eine Übertragungseinrichtung **9** angeschlossen, die an einem der Antriebseinrichtung **7** abgewandten Ende wiederum drehgelenkig mit dem Hauptverdichter **6** zusammenwirkt. Hierzu ist die Übertragungseinrichtung **9,** die in statischer Sicht die Wirkung eines Pendelstabs einnimmt, unmittelbar mit einer Anschlussplatte **24** des Hauptverdichters **6** gekoppelt. Diese wirkt wiederum mittels starrer Verbindungsstäbe **33** mit einem Presselement **18** zusammen, das hier in Form einer planen Platte ausgebildet ist. Die Abmessungen des Presselements **18** sind derart auf den Hauptkanal **4** abgestimmt, dass zumindest im Wesentlichen sämtliches, innerhalb des Hauptkanals **4** befindliches Material **2** mittels des Presselements **18** und mithin mittels des Hauptverdichters **6** erfasst und an einem der von der Antriebseinrichtung **7** abgewandten Ende des Hauptkanals **4** verdichtet wird.

Die bekannte Ballenpresse **1'** ist weiterhin mit einer Bindeeinrichtung **25** ausgestattet, mittels derer ein jeweils in Entstehen begriffener Ballen mit einer Bindeschnur eingefasst werden kann. Weiterhin umfasst die Ballenpresse **1'** eine Spanneinrichtung **26,** mittels derer eine obere Kanalwand **35** des Hauptkanals **4** entgegen einer Spannkraft gelagert ist, wobei ein Querschnitt des Hauptkanals **4** reduziert wird, sodass dem durch den Hauptkanal **4** strömenden Material **2** ein gewisser Reibungswiderstand entgegensteht. Hierdurch wird das Material **2** dazu befähigt, als solches ein Widerlager zu bilden, gegen das der Hauptverdichter **6** jeweils frisch in den Hauptkanal **4** überführtes Material verdichten kann. Dieses Widerlager wird mithin letztlich über Reibungskräfte des Materials **2** an den Kanalwänden **35** des Hauptkanals **4** gebildet.

Gegenüber einer solchen bekannten Ballenpresse **1'** ist eine erfindungsgemäße Ballenpresse **1** derart ausgebildet, dass der Hauptverdichter **6** von der Antriebseinrichtung **7** entkoppelt werden kann. Wie sich anhand von **Figur 1** ergibt, ist eine derartige Entkopplung des Hauptverdichters **6** dort nicht möglich. Stattdessen müsste die Antriebseinrichtung **7** als solche vollständig stillgelegt werden, um einen Betrieb des Hauptverdichters **6** einzustellen.

Die erfindungsgemäße Ballenpresse 1 wirkt in dem gezeigten Ausführungsbeispiel mit einer Übertragungseinrichtung **9** zusammen, die eine Kolben-Zylinder-Einheit **10** umfasst. Diese weist insgesamt zwei Kolben **15** auf, die jeweils innerhalb eines zugeordneten Zylinders **16** gelagert sind. Gemeinsam mit den Zylindern **16** begrenzen die Kolben **15** jeweils einen Kolbenraum **11** sowie einen Ringraum **12.** Die Kolbenräume **11** und die Ringräume **12** sind jeweils mittels einer Fluidleitung **13** in strömungstechnische Hinsicht miteinander verbunden, sodass ein Arbeitsfluid durch die Fluidleitung **13** von dem Kolbenraum **11** in den Ringraum **12** oder umgekehrt strömen kann. Die Fluidleitung **13** ist mit einem Rückschlagventil **17** sowie einer Ventileinrichtung **14** ausgestattet, die parallel zueinander geschaltet sind. Das Rückschlagventil **17** ist derart orientiert, dass es einen Übertritt des jeweiligen Arbeitsfluids von dem Ringraum **12** in Richtung des Kolbenraums **11** blockiert. Die Ventileinrichtung **14** ist mittels eines Aktuators **29** zwischen zwei Stellungen schaltbar, nämlich einer Offenstellung und einer Schließstellung.

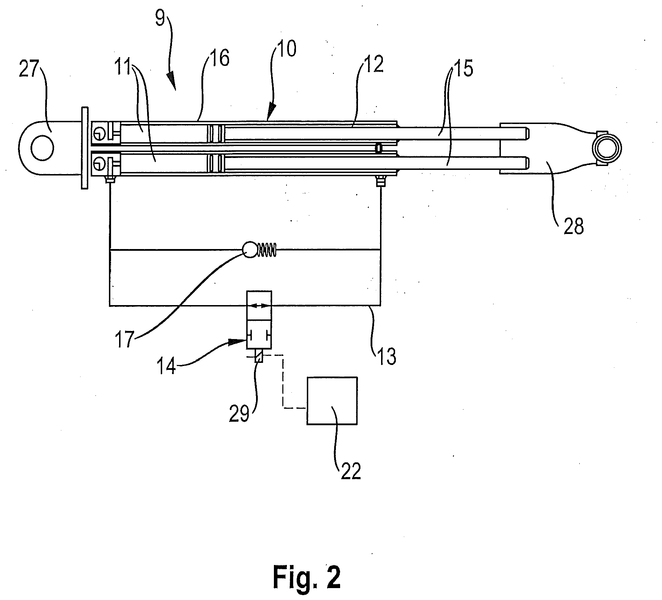

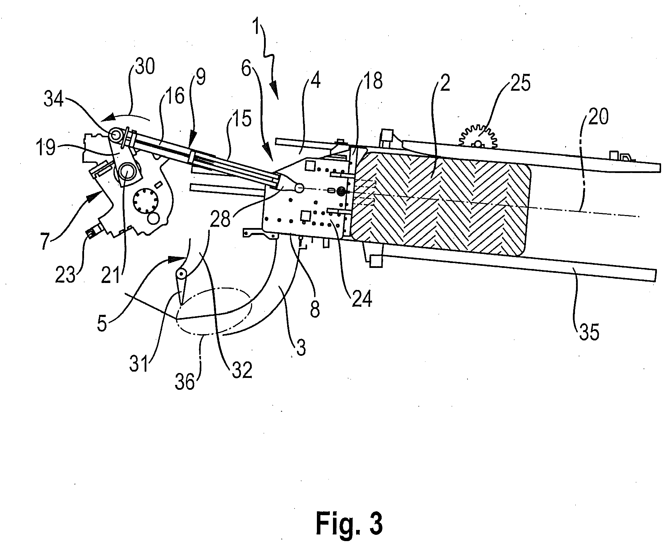

In der in **Figur 2** dargestellten Situation befindet sich die Ventileinrichtung **14** in ihrer Offenstellung, in der ein Fluidfluss zwischen dem Ringraum **12** und dem Kolbenraum **11** freigegeben ist. Dies hat zur Folge, dass der zugehörige Kolben **15** in dem zugehörigen Zylinder **16** frei bewegbar ist, da das Arbeitsfluid je nach Bewegung des Kolbens **15** selbigem ausweichen kann. Mithin ist die Übertragungseinrichtungen **9** in dem in **Figur 2** dargestellten Zustand nicht dazu geeignet, auf eine der Anschlussplatten **27, 28** wirkenden Kräfte auf die jeweils andere Anschlussplatte **27, 28** zu übertragen. Stattdessen werden die Kolben **15** im Zuge der Rotation des Kurbelarms **19** um dessen Antriebsachse **21** sukzessive aus den zugehörigen Zylindern **16** herausgezogen und wieder in sie eingeschoben. Der mittels der Übertragungseinrichtung **9** an die Antriebseinrichtung 7 angeschlossene Hauptverdichter **6** bleibt derweil still stehen. Ein entsprechender Zustand ist besonders gut **Figur 3** entnehmbar.

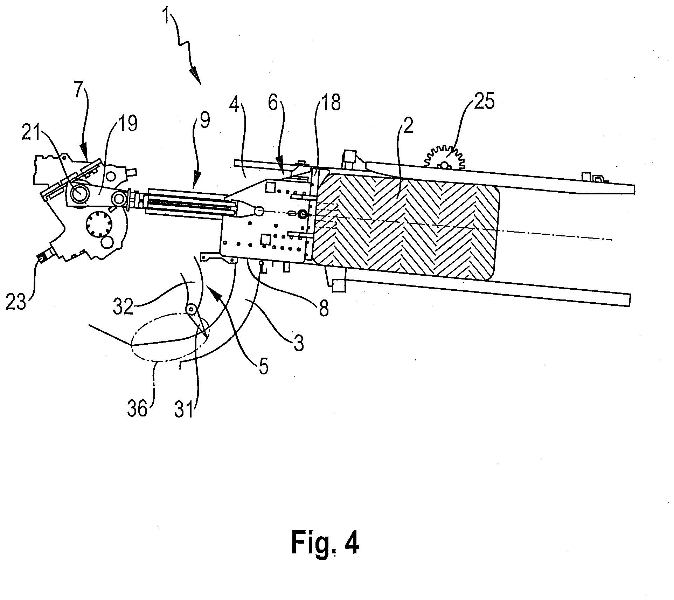

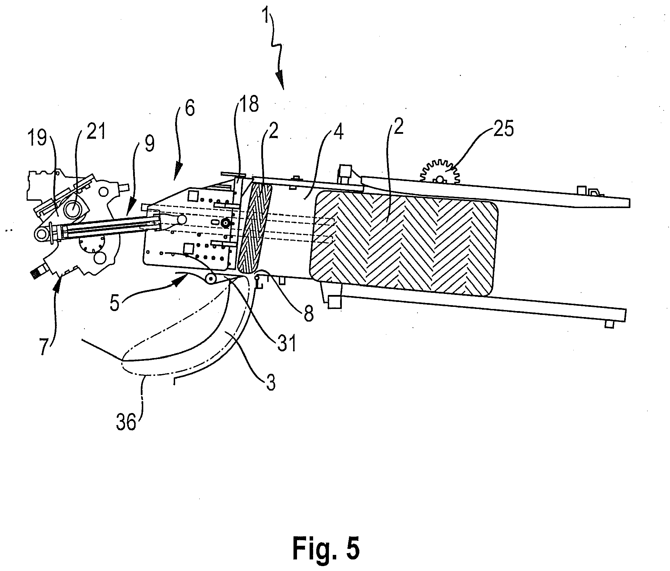

Es versteht sich, dass ein mittels einer solchen Übertragungseinrichtung **9** an einer Antriebseinrichtung **7** angeschlossener Hauptverdichter **6** mittels Überführung der Ventileinrichtung **14** zwischen deren beiden Stellungen von einem Abkoppelzustand in einen Ankoppelzustand und umgekehrt überführt werden kann. Dabei korrespondiert der Ankoppelzustand des Hauptverdichters **6** mit der Schließstellung der Ventileinrichtung **14,** da bei Vorliegen dieser Schließstellung das Arbeitsfluid nicht frei zwischen den Kolbenräumen **11** und Ringräumen **12** strömen kann. Umgekehrt korrespondiert die Offenstellung der Ventileinrichtung **14** mit dem Abkoppelzustand des Hauptverdichters **6.** Dabei stellt das Rückschlagventil **17** sicher, dass auch nach einer Überführung der Ventileinrichtung **14** in deren Schließstellung zumindest noch das Arbeitsfluid ausgehend von dem jeweiligen Kolbenraum **11** in den zugehörigen Ringraum **12** überströmen kann. Dies hat zur Folge, dass die Kolben **15** in jedem Falle noch vollständig in die zugehörigen Zylinder **16** eingeschoben werden können und erst dann ein Herausziehen der Kolben **15** aus den Zylindern **16** letztlich blockiert ist. Auf diese Weise wird die Übertragungseinrichtung **9** bei Vorliegen der Ventileinrichtung **14** in deren Schließstellung automatisch immer in einem "eingefahrenen Zustand" betrieben. Ein entsprechender Zustand ist besonders gut den **Figuren 4** **und** **5** entnehmbar.

Die Möglichkeit, die Kolben **15** trotz Vorliegens der Ventileinrichtung **14** in deren Schließstellung noch in die Zylinder **16** einschieben zu können, bewirkt, dass der Hauptverdichter **6** in jedem Fall und somit unabhängig von dem Zeitpunkt seiner Abkoppelung von der Antriebseinrichtung **7** in seine Verdichtungsstellung gefahren wird, in der er sich in einer von der Antriebseinrichtung **7** abgewandten Stellung befindet. Diese Verdichtungsstellung des Hauptverdichters **6** ist besonders gut in **Figur 3** erkennbar, wobei der Kurbelarm **19** fortwährend entgegen dem Uhrzeigersinn entsprechend eines in **Figur 3** dargestellten Pfeils **30** um die Antriebsachse **21** rotiert, ohne dass der Hauptverdichter **6** hiervon weiter beeinflusst wird. Der besondere Vorteil, den Hauptverdichter **6** in jedem Falle bei Vorliegen in seiner Verdichtungsstellung zum Stehen lassen zu kommen, besteht vor allem darin, dass auf diese Weise mittels des Hauptverdichters **6** der Übertrittsquerschnitt **8** zwischen dem Vorkanal **3** und dem Hauptkanal **4** blockiert werden kann. Dabei bildet der Hauptverdichter **6** gewissermaßen das Widerlager, gegen das der Vorverdichter **5** innerhalb des Vorkanals **3** das Material **2** vorverdichteten kann.

Der Vorverdichter **5** ist zu diesem Zweck mittels eines Rechens **31** entlang einer Bewegungslinie **36** bewegbar, die hier in etwa ellipsenförmig ausgebildet ist. Der Rechen 31 ist an einem Schwenkarm **32** gelagert, der mittels der Antriebseinrichtung **7** antreibbar ist. Die Bewegung des Rechens **31** entlang dieser Bewegungslinie **36** hat zur Folge, dass sukzessive neues, in den Vorkanal **3** eintretendes Material **2** erfasst und auf das bereits innerhalb des Vorkanals **3** befindliche Material **2** aufgeschoben wird. Hierbei tritt die Vorverdichtung des Materials **2** ein. Während dieser Vorverdichtung liegt der Hauptverdichter **6** in seinem Abkoppelzustand vor, wodurch der Bedarf der Ballenpresse **1** an elektrischer Energie gegenüber einer bekannten Ballenpresse **1'** deutlich reduziert ist.

Der Hauptverdichter **6** wird erst dann wieder in seinen Ankoppelzustand überführt, wenn die Überführung des vorverdichteten Materials **2** von dem Vorkanal **3** in den Hauptkanal **4** ansteht. Um die Ankoppelung des Hauptverdichter **6** an die Antriebseinrichtung **7** schließlich vorzunehmen, wird die Ventileinrichtung **14** mittels des Aktuators **29** von ihrer Offenstellung in ihre Schließstellung überführt. Die Steuerung dieses Vorgangs wird mittels einer in **Figur 2** dargestellten Steuerungseinrichtung **22** vorgenommen. Der Zeitpunkt der Schließung der Ventileinrichtung **14** ist aufgrund der Funktionalität des Rückschlagventils **17** vergleichsweise unkritisch, da in jedem Falle das Arbeitsfluid in der vorstehend beschriebenen Weise noch ausgehend von den Kolbenräumen **11** in die Ringräume **12** überströmen kann. Nach der Schließung der Ventileinrichtung **14** wird demzufolge die Übertragungseinrichtungen **9** zunächst maximal eingefahren, bevor sie schließlich den Hauptverdichter **6** fortan wieder "mitschleppt". Dieser Zeitpunkt, von dem an der Hauptverdichter **6** wieder in seinem Ankoppelzustand vorliegt, ist besonders gut anhand von **Figur 4** erkennbar.

Bezogen auf die Steuerungseinrichtung **22** ist es hier von besonderem Vorteil, dass diese die Ventileinrichtung **14** koordiniert mit dem Vorverdichter **5** ansteuert, sodass die Ventileinrichtung **14** unmittelbar vor der Ausführung einer Überführungsbewegung des Vorverdichters **5** betätigt wird. Nachdem die Ventileinrichtung **14** in ihre Schließstellung überführt wurde, wird der Hauptverdichter **6** ausgehend von seiner Verdichtungsstellung innerhalb des Hauptkanals **4** in Richtung der Antriebseinrichtung **7** zurückgezogen und mithin in seine Ausholstellung überführt. Diese ist besonders gut anhand von **Figur 5** erkennbar. Sodann führt der Vorverdichter 5 seine Überführungsbewegung aus, wobei der Rechen **31** sich entlang einer in **Figur 5** dargestellten Bewegungslinie **36** bewegt. Hierbei wird ein in gewisser Weise scheibenförmiges Paket vorverdichteten Materials **2** durch den Übertrittsquerschnitt **8,** der aufgrund des Zurückziehens des Hauptverdichters **6** wieder freigegeben ist, in den Hauptkanal **4** überführt. Der Hauptverdichter **6** erfasst dieses Material 2 sodann und presst es gegen den bereits im Entstehen begriffenen Ballen innerhalb des Hauptkanals **4.** Der Vorverdichter **5** kann im Weiteren unmittelbar wieder die Vorverdichtung weiteren Materials **2** aufnehmen. Nach der Ausführung einer gewissen Anzahl an Zyklen oder nach dem Ablauf einer gewissen Zeit oder nach Erreichen eines sonstigen Abbruchkriteriums wird sodann der Hauptverdichter **6** wieder von der Antriebseinrichtung **7** entkoppelt, indem die Ventileinrichtung **14** geschaltet wird.

### Bezugszeichenliste

- 1: Ballenpresse
- 2: Material
- 3: Vorkanal
- 4: Hauptkanal
- 5: Vorverdichter
- 6: Hauptverdichter
- 7: Antriebseinrichtung
- 8: Übertrittsquerschnitt
- 9: Übertragungseinrichtung
- 10: Kolben-Zylinder-Einheit
- 11: Arbeitsraum/Kolbenraum
- 12: Arbeitsraum/Ringraum
- 13: Fluidleitung
- 14: Ventileinrichtung
- 15: Kolben
- 16: Zylinder
- 17: Rückschlagventil
- 18: Presselement
- 19: Kurbelarm
- 20: Kanalachse
- 21: Antriebsachse
- 22: Steuerungseinrichtung
- 23: Welle
- 24: Anschlussplatte
- 25: Bindeeinrichtung
- 26: Spanneinrichtung
- 27: Anschlussplatte
- 28: Anschlussplatte
- 29: Aktuator
- 30: Pfeil
- 31: Rechen
- 32: Schwenkarm
- 33: Verbindungsstab
- 34: Drehgelenk
- 35: Kanalwand
- 36: Bewegungslinie

## Patentansprüche

1. Landwirtschaftliche Ballenpresse (1) zum Pressen von Material (2) zu quaderförmigen Ballen, insbesondere zum Pressen von Strohballen, umfassend
- eine Vorkanal (3),
- einen Hauptkanal (4),
- mindestens einen Vorverdichter (5),
- mindestens einen Hauptverdichter (6) sowie
- mindestens eine Antriebseinrichtung (7),
wobei der Vorkanal (2) und der Hauptkanal (3) mittels mindestens eines Übertrittsquerschnitts (8) miteinander verbunden sind, sodass das Material (2) ausgehend von dem Vorkanal (3) in den Hauptkanal (4) übertreten kann,
wobei das Material (2) innerhalb des Vorkanals (3) mittels des Vorverdichters (5) vorverdichtbar und anschließend mittels des Vorverdichters (5) in den Hauptkanal (4) bewegbar ist,
wobei der Hauptverdichter (6) zumindest mittelbar mit der Antriebseinrichtung (7) zusammenwirkt, sodass der Hauptverdichter (6) innerhalb des Hauptkanals (4) oszillierend hin und her bewegbar ist und auf diese Weise in dem Hauptkanal (4) befindliches Material (2) zu einem quaderförmigen Ballen pressbar ist,
der Hauptverdichter (6) wiederholt wechselweise von der Antriebseinrichtung (7) abkoppelbar bzw. an die Antriebseinrichtung (7) ankoppelbar ist,
wobei bei Vorliegen des Hauptverdichters (6) in einem Abkoppelzustand, in dem er von der Antriebseinrichtung (7) abgekoppelt ist, eine Kraftübertragung zwischen dem Hauptverdichter (6) und der Antriebseinrichtung (7) derart unterbrochen ist, dass die oszillierende Bewegung des Hauptverdichters (6) innerhalb des Hauptkanals (4) ausgesetzt ist, wobei
der Hauptverdichter (6) mindestens eine Übertragungseinrichtung (9) umfasst, die mindestens eine Kolben-Zylinder-Einheit (10) aufweist, wobei die Kolben-Zylinder-Einheit (10) zwei Arbeitsräume (11, 12) in Form eines Kolbenraums (11) sowie eines Ringraums (12) umfasst und die beiden Arbeitsräume (11, 12) mittels einer Fluidleitung (13) strömungstechnisch miteinander verbindbar,
**dadurch gekennzeichnet, dass**
die Fluidleitung (13) mit mindestens einer Ventileinrichtung (14) zusammenwirkt, die bei Vorliegen in einer Offenstellung einen Fluidfluss zwischen den Arbeitsräumen (11, 12) freigibt, sodass ein Kolben (15) der Kolben-Zylinder-Einheit (10) relativ zu dem zugehörigen Zylinder (16) bewegbar ist, und bei Vorliegen in einer Schließstellung den Fluidfluss zwischen den Arbeitsräumen (11, 12) sperrt, sodass eine Relativbewegung zwischen dem Kolben (15) und dem Zylinder (16) blockiert ist.

2. Ballenpresse (1) nach Anspruch 1, **gekennzeichnet durch** ein in der Fluidleitung (13) angeordnetes Rückschlagventil (17), das parallel zu der Ventileinrichtung (14) geschaltet ist und einen Fluidfluss von dem Kolbenraum (11) in Richtung des Ringraums (12) freigibt und einen Fluidfluss von dem Ringraum (12) in Richtung des Kolbenraums (11) sperrt.

3. Ballenpresse (1) nach einem der Ansprüche 1 bis 2, **dadurch gekennzeichnet, dass** der Hauptverdichter (6) ein Presselement (18) umfasst, mittels dessen das Material (2) innerhalb des Hauptkanals (4) verdichtbar ist, wobei die Übertragungseinrichtung (9) an einem der Antriebseinrichtung (7) abgewandten Ende drehgelenkig mit dem Presselement (18) und an einem der Antriebseinrichtung (7) zugewandten Ende drehgelenkig mit einem Kurbelarm (19) verbunden ist, der mittels der Antriebseinrichtung (7) um eine zu einer Kanalachse (20) des Hauptkanals (4) senkrechte Antriebsachse (21) drehantreibbar ist.

4. Ballenpresse (1) nach Anspruch 3, **dadurch gekennzeichnet, dass** der Kolben (15) der Übertragungseinrichtung (9) bei Vorliegen des Hauptverdichters (6) in einer Verdichtungsstellung, in der sich das Presselement (18) innerhalb des Hauptkanals (4) an einem von der Antriebseinrichtung (7) abgewandten Totpunkt befindet, derart in den Zylinder (16) der Kolben-Zylinder-Einheit (10) eingefahren ist, dass Volumina des Kolbenraums (11) minimal und des Ringraums (12) maximal sind.

5. Ballenpresse (1) nach Anspruch 4, **gekennzeichnet durch** eine Halteeinrichtung, mittels derer das Presselement (18) nach Abkoppelung des Hauptverdichters (6) von der Antriebseinrichtung (7) an seinem der Antriebseinrichtung (7) abgewandten Totpunkt haltbar ist.

6. Ballenpresse (1) nach einem der Ansprüche 1 bis 5, **gekennzeichnet durch** eine Steuerungseinrichtung (22), die dazu geeignet ist, die Abkoppelung und die Ankoppelung des Hauptverdichters (6) von bzw. an die Antriebseinrichtung (7) zu steuern, insbesondere in Abhängigkeit von einem Betriebszustand des Vorverdichters (5).

7. Ballenpresse (1) nach einem der Ansprüche 1 bis 6, **dadurch gekennzeichnet, dass** der Hauptverdichter (6) bei Vorliegen in seinem Abkoppelzustand derart innerhalb des Hauptkanals (4) positioniert ist, dass er den Übertrittsquerschnitt (8) blockiert.

8. Verfahren zum Betrieb einer Ballenpresse (1) nach einem der Ansprüche 1 bis 7, aufweisend die folgenden Verfahrensschritte:
a) Zu pressendes Material (2) wird mittels des Vorverdichters (5) innerhalb des Vorkanals (3) vorverdichtet und nach Abschluss der Vorverdichtung in den Hauptkanal (4) überführt.
b) Das vorverdichtete Material (2) wird innerhalb des Hauptkanals (4) mittels des Hauptverdichters (6) zu einem quaderförmigen Ballen gepresst, wobei der Hauptverdichter (6) innerhalb des Hauptkanals (4) oszillierend hin und her bewegt wird,
c) Der Hauptverdichter (6) wird während der Vorverdichtung des Materials (2) innerhalb des Vorkanals (3) zumindest zeitweise von der Antriebseinrichtung (7) abgekoppelt, sodass eine Bewegung des Hauptverdichters (6) innerhalb des Hauptkanals (4) ausgesetzt ist, wobei der Hauptverdichter (6) mindestens eine Übertragungseinrichtung (9) umfasst, die mindestens eine Kolben-Zylinder-Einheit (10) aufweist, wobei die Kolben-Zylinder-Einheit (10) zwei Arbeitsräume (11, 12) in Form eines Kolbenraums (11) sowie eines Ringraums (12) umfasst und die beiden Arbeitsräume (11, 12) mittels einer Fluidleitung (13) strömungstechnisch miteinander verbindbar, **dadurch gekennzeichnet, dass** die Fluidleitung (13) mit mindestens einer Ventileinrichtung (14) zusammenwirkt, die bei Vorliegen in einer Offenstellung einen Fluidfluss zwischen den Arbeitsräumen (11, 12) freigibt, sodass ein Kolben (15) der Kolben-Zylinder-Einheit (10) relativ zu dem zugehörigen Zylinder (16) bewegbar ist, und bei Vorliegen in einer Schließstellung den Fluidfluss zwischen den Arbeitsräumen (11, 12) sperrt, sodass eine Relativbewegung zwischen dem Kolben (15) und dem Zylinder (16) blockiert ist.

9. Verfahren nach Anspruch 8, **dadurch gekennzeichnet, dass** der Hauptverdichter (6) derart von der Antriebseinrichtung (7) abgekoppelt wird, dass er in einer Verdichtungsstellung zum Stehen kommt, in der sich ein Presselement (18) des Hauptverdichters (6) innerhalb des Hauptkanals (4) an einem von der Antriebseinrichtung (7) abgewandten Totpunkt befindet, wobei vorzugsweise der Übertrittsquerschnitt (8) zwischen Vorkanal (3) und Hauptkanal (4) bei Vorliegen des Hauptverdichters (6) in seinem Abkoppelzustand blockiert wird.

10. Verfahren nach Anspruch 8 oder 9, **dadurch gekennzeichnet, dass** Bewegungsabläufe des Vorverdichters (5) und des Hauptverdichters (6) derart koordiniert werden, dass bei Vorliegen des Hauptverdichters (6) in seinem Abkoppelzustand der Vorverdichter (5) zunächst eine Verdichtungsbewegung ausführt, mittels derer das Material (2) innerhalb des Vorkanals (3) vorverdichtet wird, und schließlich eine Übertrittsbewegung ausführt, mittels derer der Vorverdichter (5) das vorverdichtete Material (2) in den Hauptkanal (4) überführt, wobei der Hauptverdichter (6) vor der Ausführung der Übertrittsbewegung des Vorverdichters (5) von seinem Abkoppelzustand in einen Ankoppelzustand überführt wird, in dem eine Kraftübertragung zwischen dem Hauptverdichter (6) und der Antriebseinrichtung (7) hergestellt ist.

11. Verfahren nach den Ansprüchen 9 und 10, **dadurch gekennzeichnet, dass** die Ankoppelung des Hauptverdichters (6) an die Antriebseinrichtung (7) mit dem Vorverdichter (5) koordiniert wird, wobei der Hauptverdichter (6) nach erfolgter Ankoppelung ausgehend von seiner Verdichtungsstellung in seine gegenüberliegende Ausholstellung überführt wird, in der sich das Presselement (18) innerhalb des Hauptkanals (4) an einem der Antriebseinrichtung (7) zugewandten Totpunkt befindet, wobei der Hauptverdichter (6) im Zuge dieser Überführung den Übertrittsquerschnitt (8) freigibt und der Vorverdichter (5) nach der Freigabe des Übertrittsquerschnitt (8) das vorverdichtete Material (2) in den Hauptkanal (4) überführt.

12. Verfahren nach einem der Ansprüche 8 bis 11, **dadurch gekennzeichnet, dass** der Hauptverdichter (6) nach erfolgter Überführung des vorverdichteten Materials (2) von dem Vorkanal (3) in den Hauptkanal (4) betrieben wird, während der Vorverdichter (5) in dem Vorkanal (3) beginnt, weiteres Material (2) vorzuverdichten, und der Hauptverdichter (6) von der Antriebseinrichtung (7) abgekoppelt wird, bevor die Vorverdichtung des weiteren Materials (2) abgeschlossen ist.

## Claims

1. An agricultural baler (1) for compacting material (2) into square bales, in particular for compacting straw bales, comprising
- a preliminary channel (3),
- a main channel (4),
- at least one pre-compressor (5),
- at least one main compressor (6), as well as
- at least one driving device (7),
wherein the preliminary channel (2) and the main channel (3) are connected together by means of at least one transfer section (8), so that the material originating from the preliminary channel (3) can be transferred into the main channel (4),
wherein the material (2) inside the preliminary channel (3) can be pre-compressed by means of the pre-compressor (5) and then can be moved into the main channel (4) by means of the pre-compressor (5),
wherein the main compressor (6) at least indirectly interacts with the driving device (7), so that the main compressor (6) is movable inside the main channel (4) in a bidirectional oscillation and in this manner, material (2) located in the main channel (4) can be compacted into a square bale,
the main compressor (6) can be repeatedly and alternately uncoupled from the driving device (7) or coupled to the driving device (7),
wherein, when the main compressor (6) is in an uncoupled state in which it is uncoupled from the driving device (7), a transmission of force between the main compressor (6) and the driving device (7) is interrupted in a manner such that the oscillating movement of the main compressor (6) inside the main channel (4) is suspended, wherein
the main compressor (6) comprises at least one transfer device (9) which has at least one piston and cylinder unit (10), wherein the piston and cylinder unit (10) comprises two working chambers (11, 12) in the form of a piston chamber (11) as well as an annular chamber (12) and the two working chambers (11, 12) can be connected together in a fluid communicating manner by means of a fluid line (13),
**characterized in that**
the fluid line (13) interacts with at least one valve device (14) which, when in an open position, enables a flow of fluid between the working chambers (11, 12), so that a piston (15) of the piston and cylinder unit (10) can be moved relative to the associated cylinder (16), and when in a closed position, blocks the flow of fluid between the working chambers (11, 12), so that a relative movement between the piston (15) and the cylinder (16) is blocked.

2. The baler (1) according to claim 1, **characterized by** a non-return valve (17) disposed in the fluid line (13) and connected in parallel to the valve device (14) and which enables a flow of fluid from the piston chamber (11) in the direction of the annular chamber (12) and which blocks a flow of fluid from the annular chamber (12) in the direction of the piston chamber (11).

3. The baler (1) according to claim 1 or claim 2, **characterized in that** the main compressor (6) comprises a compacting element (18), by means of which the material (2) inside the main channel (4) can be compressed, wherein the transfer device (9) is pivotably connected to the compacting element (18) at an end which is directed away from the driving device (7) and is pivotably connected at an end which is directed towards the driving device (7) to a crank arm (19) which can be driven in rotation by means of the driving device (7) about a drive axis (21) which is perpendicular to a channel axis (20) of the main channel (4).

4. The baler (1) according to claim 3, **characterized in that** when the main compressor (6) is in a compression position in which the compacting element (18) inside the main channel (4) is at a dead point which is directed away from the driving device (7), the piston (15) of the transfer device (9) has been retracted into the cylinder (16) of the piston and cylinder unit (10) in a manner such that the volume of the piston chamber (11) is a minimum and the volume of the annular chamber (12) is a maximum.

5. The baler (1) according to claim 4, **characterized by** a retaining device by means of which, after uncoupling the main compressor (6) from the drive device (7), the compacting element (18) can be retained at its dead point which is directed away from the driving device (7).

6. The baler (1) according to one of claims 1 to 5, **characterized by** a control device (22) which is suitable for controlling the uncoupling and coupling of the main compressor (6) from or to the driving device (7), in particular as a function of an operational state of the pre-compressor (5).

7. The baler (1) according to one of claims 1 to 6, **characterized in that** when in its uncoupled state, the main compressor (6) is positioned inside the main channel (4) in a manner such that it blocks the transfer section (8).

8. A method for operating a baler (1) according to one of claims 1 to 7, having the following steps of the method:
a) material (2) to be compacted is pre-compressed inside the preliminary channel (3) by means of the pre-compressor (5) and is transferred into the main channel (4) after the pre-compression is completed,
b) the pre-compressed material (2) is compacted inside the main channel (4) by means of the main compressor (6) to form a square bale, wherein the main compressor (6) is oscillated bidirectionally inside the main channel (4),
c) during the pre-compression of the material (2) inside the preliminary channel (3), the main compressor (6) is uncoupled from the driving device (7) at least periodically so that a movement of the main compressor (6) inside the main channel (4) is suspended, wherein the main compressor (6) comprises at least one transfer device (9) which has at least one piston and cylinder unit (10), wherein the piston and cylinder unit (10) comprises two working chambers (11, 12) in the form of a piston chamber (11) as well as an annular chamber (12) and the two working chambers (11, 12) can be connected together in a fluid communicating manner by means of a fluid line (13), **characterized in that** the fluid line (13) interacts with at least one valve device (14) which, when in an open position, enables a flow of fluid between the working chambers (11, 12) so that a piston (15) of the piston and cylinder unit (10) can move relative to the associated cylinder (16), and when in a closed position, the valve device blocks the flow of fluid between the working chambers (11, 12) so that a relative movement between the piston (15) and the cylinder (16) is blocked.

9. The method according to claim 8, **characterized in that** the main compressor (6) is uncoupled from the driving device (7) in a manner such that it comes to a standstill in a compression position in which a compacting element (18) of the main compressor (6) is located inside the main channel (4) at a dead point which is directed away from the driving device (7), wherein preferably, the transfer section (8) between the preliminary channel (3) and the main channel (4) is blocked when the main compressor (6) is in its uncoupled state.

10. The method according to claim 8 or claim 9, **characterized in that** the sequences for the movements of the pre-compressor (5) and of the main compressor (6) are coordinated in a manner such that when the main compressor (6) is in its uncoupled state, the pre-compressor (5) initially executes a compression movement, by means of which the material (2) inside the preliminary channel (3) is pre-compressed, and finally executes a transfer movement, by means of which the pre-compressor (5) transfers the pre-compressed material (2) to the main channel (4) wherein, prior to executing the transfer movement of the pre-compressor (5), the main compressor (6) is transferred from its uncoupled state into a coupled state in which a transmission of force between the main compressor (6) and the driving device (7) is established.

11. The method according to claim 9 and claim 10, **characterized in that** the coupling of the main compressor (6) to the driving device (7) is coordinated with the pre-compressor (5) wherein, after coupling is completed, the main compressor (6) is transferred from its original compression position into its opposing clearing position in which the compacting element (18) is located inside the main channel (4) at a dead point which faces the driving device (7) wherein, during the course of this transfer, the main compressor (6) opens up the transfer section (8) and after opening up the transfer section (8), the pre-compressor (5) transfers the pre-compressed material (2) into the main channel (4).

12. The method according to one of claims 8 to 11, **characterized in that** the main compressor (6) is operated after the transfer of the pre-compressed material (2) from the preliminary channel (3) into the main channel (4) has been completed, while the pre-compressor (5) in the preliminary channel (3) begins to pre-compress other material (2), and the main compressor (6) is uncoupled from the driving device (7) before the pre-compression of the other material (2) has been completed.

## Revendications

1. Presse à balles agricole (1) pour le pressage de matière (2) en balles parallélépipédiques, en particulier pour le pressage de balles de paille, incluant
- un précanal (3),
- un canal principal (4)
- au moins un précompacteur (5)
- au moins un compacteur principal (6) ainsi que
- au moins un équipement d'entraînement (7),
le précanal (2) et le canal principal (3) étant reliés l'un à l'autre au moyen d'au moins une section transversale de passage (8), de sorte que la matière (2) provenant du précanal (3) peut passer dans le canal principal (4),
la matière (2) étant précompactable à l'intérieur du précanal (3) au moyen du précomptacteur (5) et étant ensuite déplaçable vers le canal principal (4) au moyen du précomptacteur (5),
le compacteur principal (6) coopérant indirectement avec l'équipement d'entraînement (7), de sorte que le compacteur principal (6) soit déplaçable en va-et-vient oscillant à l'intérieur du canal principal (4) et que, de cette façon, de la matière (2) se trouvant dans le canal principal (4) soit pressable en une balle parallélépipédique,
le compacteur principal (6) pouvant, de manière répétée, être alternativement découplé de l'équipement d'entraînement (7), respectivement accouplé à l'équipement d'entraînement (7),
en présence d'un compacteur principal (6) dans un état découplé, dans lequel il est découplé de l'équipement d'entraînement (7), une transmission de force entre le compacteur principal (6) et l'équipement d'entraînement (7) étant interrompue, de sorte que le mouvement oscillant du compacteur principal (6) à l'intérieur du canal principal (4) cesse,
le compacteur principal (6) incluant au moins un équipement de transmission (9) qui comporte au moins une unité piston-cylindre (10), l'unité piston-cylindre (10) incluant deux chambres de travail (11, 12) en forme de chambre de piston (11) ainsi qu'une chambre de tige (12), et les deux chambres de travail (11, 12) pouvant être reliées l'une à l'autre sur le plan de l'écoulement au moyen d'une conduite de fluide (13),
**caractérisée en ce que**
la conduite de fluide (13) coopère avec au moins un équipement de valve (14) qui, en présence d'une position ouverte, autorise un flux de fluide entre les chambres de travail (11, 12), de sorte qu'un piston (15) de l'unité piston-cylindre (10) est déplaçable par rapport au cylindre associé (16) et, en présence d'une position fermée, interdit le flux de fluide entre les chambres de travail (11, 12), de sorte qu'un déplacement relatif entre le piston (15) et le cylindre (16) est empêché.

2. Presse à balles (1) selon la revendication 1, **caractérisée par** une valve anti-retour (17) qui est disposée sur la conduite de fluide (13) et qui est montée en parallèle à l'équipement de valve (14) et autorise un flux de fluide depuis la chambre de piston (11) en direction de la chambre de tige (12) et interdit un flux de fluide depuis la chambre de tige (12) en direction de la chambre de piston (11).

3. Presse à balles (1) selon une des revendications 1 à 2, **caractérisée en ce que** le compacteur principal (6) inclut un élément de pressage (18) au moyen duquel la matière (2) est compactable à l'intérieur du canal principal (4), l'équipement de transmission (9) étant relié, à une extrémité opposée à l'équipement d'entraînement (7), avec une articulation tournante à l'élément de pressage (18) et, à une extrémité tournée vers l'équipement d'entraînement (7), avec une articulation tournante à une manivelle (19), laquelle est entraînable en rotation, au moyen de l'équipement d'entraînement (7), autour d'un axe d'entraînement (21) perpendiculaire à un axe de canal (20) du canal principal (4).

4. Presse à balles (1) selon la revendication 3, **caractérisée en ce que**, en présence du compacteur principal (6) dans une position de compactage, dans laquelle l'élément de pressage (18) se trouve à l'intérieur du canal principal (4) à un point mort situé à l'opposé de l'équipement d'entraînement (7), le piston (15) de l'équipement de transmission (9) est engagé dans le cylindre (16) de l'unité piston-cylindre (10) de façon que le volume de la chambre de piston (11) est minimal et celui de la chambre de tige (12) est maximal.

5. Presse à balles (1) selon la revendication 4, **caractérisée par** un équipement de maintien au moyen duquel l'élément de pressage (18) peut être maintenu à son point mort situé à l'opposé de l'équipement d'entraînement (7) après découplage du compacteur principal (6) de l'équipement d'entraînement (7).

6. Presse à balles (1) selon une des revendications 1 à 5, **caractérisée par** un équipement de commande (22) qui est apte à commander le découplage et le couplage du compacteur principal (6) du, respectivement à l'équipement d'entraînement (7), en particulier en fonction d'un état de fonctionnement du précompacteur (5).

7. Presse à balles (1) selon une des revendications 1 à 6, **caractérisée en ce que**, le compacteur principal (6), en présence de son état découplé, est positionné à l'intérieur du canal principal (4) de façon à bloquer la section transversale de passage (8).

8. Procédé de fonctionnement d'une presse à balles (1) selon une des revendications 1 à 7, comportant les étapes de procédé suivantes :
a) de la matière à presser (2) est précompactée à l'intérieur du précanal (3) au moyen du précompacteur (5) et, au terme du précompactage, est transférée dans le canal principal (4),
b) la matière précompactée (2) est pressée à l'intérieur du canal principal (4) au moyen du compacteur principal (6) en une balle parallélépipédique, le compacteur principal (6) étant déplacé en va-et-vient oscillant à l'intérieur du canal principal (4).
c) le compacteur principal (6) est au moins temporairement découplé de l'équipement d'entraînement (7) pendant le précompactage de la matière (2) à l'intérieur du précanal (3), de sorte qu'un déplacement du compacteur principal (6) à l'intérieur du canal principal (4) cesse, le compacteur principal (6) incluant au moins un équipement de transmission (9) qui comporte au moins une unité piston-cylindre (10), l'unité piston-cylindre (10) incluant deux chambres de travail (11, 12) en forme d'une chambre de piston (11) ainsi que d'une chambre de tige (12) et les deux chambres de travail (11, 12) pouvant être reliées l'une à l'autre sur le plan de l'écoulement au moyen d'une conduite de fluide (13), **caractérisé en ce que** la conduite de fluide (13) coopère avec au moins un équipement de valve (14) qui, en présence d'une position ouverte, autorise un flux de fluide entre les chambres de travail (11, 12), de sorte qu'un piston (15) de l'unité piston-cylindre (10) est déplaçable par rapport au cylindre associé (16) et, en présence d'une position fermée, interdit le flux de fluide entre les chambres de travail (11, 12), de sorte qu'un déplacement relatif entre le piston (15) et le cylindre (16) est empêché.

9. Procédé selon la revendication 8, **caractérisé en ce que** le compacteur principal (6) est découplé de l'équipement d'entraînement (7), de sorte qu'il s'immobilise dans une position de compactage dans laquelle un élément de pressage (18) du compacteur principal (6) se trouve à un point mort situé à l'opposé de l'équipement d'entraînement (7) à l'intérieur du canal principal (4), la section transversale de passage (8) entre le précanal (3) et le canal principal (4) étant de préférence bloquée en présence du compacteur principal (6) dans son état découplé.

10. Procédé selon la revendication 8 ou 9, **caractérisé en ce que** des séquences de déplacement du précompacteur (5) et du compacteur principal (6) sont coordonnées de façon que, en présence du compacteur principal (6) dans son état découplé, le précomptacteur (5) effectue d'abord un mouvement de compactage au moyen duquel la matière (2) est précompactée à l'intérieur du précanal (3) et effectue enfin un mouvement de passage au moyen duquel le précompacteur (5) transfère la matière précompactée (2) vers le canal principal (4), le compacteur principal (6) étant transféré, avant l'exécution du mouvement de passage du précompacteur (5), de son état découplé à son état couplé dans lequel une transmission de force est établie entre le compacteur principal (6) et l'équipement d'entraînement (7).

11. Procédé selon les revendications 9 et 10, **caractérisé en ce que** le couplage du compacteur principal (6) à l'équipement d'entraînement (7) est coordonné avec le précompacteur (5), le compacteur principal (6) étant transféré de sa position de compactage vers sa position reculée opposée dans laquelle l'élément de pressage (18) se trouve à l'intérieur du canal principal (4) à son point mort tourné vers l'équipement d'entraînement (7), le compacteur principal (6) dégageant la section transversale de passage (8) au cours de ce transfert et le précompacteur (5) transférant, après le dégagement de la section transversale de passage (8), la matière précompactée (2) dans le canal principal (4).

12. Procédé selon une des revendications 8 à 11, **caractérisé en ce que** le compacteur principal (6) est actionné à l'issue du transfert de la matière précompactée (2) depuis le précanal (3) vers le canal principal (4), tandis que, dans le précanal (3), le précompacteur (5) commence à précompacter de la nouvelle matière (2), et que le compacteur principal (6) est découplé de l'équipement d'entraînement (7) avant que le précompactage de la nouvelle matière (2) ne soit achevé.
